Europäisches Patentamt

European Patent Office

Office européen des brevets

(11) Publication number: **0 271 735**
**A1**

(12) # EUROPEAN PATENT APPLICATION

(21) Application number: 87117085.8

(22) Date of filing: 19.11.87

(51) Int. Cl.⁴: **A21D 2/38**

| | |
|---|---|
| The title of the invention has been amended (Guidelines for Examination in the EPO, A-III, 7.3). | (71) Applicant: **NEXUS APS**<br>**Palsgaard**<br>**DK-7130 Juelsminde(DK)** |
| (30) Priority: **20.11.86 DK 5564/86** | (72) Inventor: **DREYER, Jack Allan**<br>**Hojvangen 30**<br>**DK-8700 Horsens(DK)**<br>Inventor: **ZEEBERG, John**<br>**Skraenten 5, Hosby**<br>**DK-7130 Juelsminde(DK)**<br>Inventor: **BIRKEBAEK, Susanne**<br>**Klejsmollevej 9, Kleis,**<br>**DK-7130 Juelsminde(DK)** |
| (43) Date of publication of application:<br>**22.06.88 Bulletin 88/25** | |
| (84) Designated Contracting States:<br>**AT BE CH DE FR GB GR IT LI LU NL SE** | (74) Representative: **Patentanwälte Grünecker,**<br>**Kinkeldey, Stockmair & Partner**<br>**Maximilianstrasse 58**<br>**D-8000 München 22(DE)** |

(54) **Bread-acidifying composition, its manufacture by extrusion, and bread manufacture.**

(57) An acidifying composition for bread or bread products conferring improved taste to the bread or bread products, in particular rye bread, but also light or white bread, is prepared by extruding a mixture comprising a cereal component and an edible organic acid or a mixture of edible organic acids at an elevated temperature, such as a temperature in the range of 110-240°C. In particular, a dry free-flowing powdery composition is prepared from a high amount of a liquid edible organic acid or a mixture of acids such as lactic acid or acetic acid in combination with rye meal or wheat flour, the preferred acid/cereal weight ratio being 20:80. Typically, the extrusion results in relatively crisp granules which are optionally comminuted to a dry free-flowing powdery product, but also a more pasty product may be obtained. The dry composition is suited for incorporation in "ready-to-use" bread mixes or for direct incorporation in the bread dough. The acidifying composition is preferably employed in an mount of 0.5-10% by weight calculated on the total dry bread mix constituents.

EP 0 271 735 A1

# BREAD-ADJUSTING COMPOSITION

The present invention relates to a composition useful for conferring acidity to bread types where said acidity is necessary for the development of the dough and/or desirable for taste reasons. Examples of such bread types are rye bread or rye bread based products (such as e.g. powders for making the Danish dish "øllebrød" (a dish made of rye bread and beer)) or bread types based on rye meal combined with other meals or flours, or bread types based primarily or exclusively on other meals or flours than rye meal, such as wheat flour, where an acidic taste note is interesting and/or where the acidity is necessary or desirable for dough development. The bread types may be as well loaf types as crisp bread and biscuit types.

In the known art, the conventional method for acidifying dark bread, e.g. bread based on rye meal, is to add sour dough to the bread dough. However, in recent years, it has also become customary to acidify dark bread by addition of mechanical mixtures of cereals and solid acids such as citric acid, malic acids or lactates or acetates or by directly adding liquid acids such as lactic acid or acetic acid (which are most desirable acids for this purpose as they are natural constituents of sour dough) to the dough. When white bread or white bread products are to be acidified, this is conventionally done by inclusion of e.g. brewers yeast, sour dough or so called sponge dough in the bread dough which is subsequently subjected to long-term bulk fermentation. Owing to the increasing use in the bakery industry of "ready-to-use" bread mixes containing flour, meal, and taste and flavouring compositions, it would be desirable if acidifying compositions could be made as dry powders and included in these mixes as this would make the bread preparation more easy and thus more economic.

Dry acidifying compositions exist, examples of which are the above-mentioned mixtures of cereals and solid acids, and dried comminuted sour dough. Sour dough in a dry state is, however, relatively expensive to prepare, and its content of acids is not as high as would be desirable. It has not been possible synthetically to produce suitable dry acidifying compositions containing sufficiently large amounts of lactic acid or acetic acid or other liquid acids to make the product useful for acidification of the more acidic dough bread types such as rye bread.

The present invention provides a novel and valuable acidifying composition and an efficient method for its production. In a particularly important embodiment, the composition is a dry, free-flowing powdery composition containing an acid such as lactic acid or acetic acid which in itself is liquid at room temperature. However, also a dry composition of the invention containing an acid which is solid at room temperature is of particular interest, because it shows particularly beneficial properties such as homogeneity and may be prepared in a very economic manner. On the other hand, although the preferred product prepared according to the invention is presently a dry free-flowing powder product because of the advantages discussed herein, it is also within the scope of the invention to produce the acidifying composition in a more humid stage, e.g. in the form of a paste, such as will be explained below.

According to the invention, it has been found that a very satisfactory acidifying composition may be made by extruding a mixture comprising a cereal component and at least 6% by weight of an edible organic acid or a mixture of edible organic acids at an elevated temperature and optionally disintegrating the extruded product.

Normally, the product obtained from the extruder consists of granules of a relatively crisp character. The granules may, in principle, be added as such to the dough and become disintegrated during the mixing of the dough (which is within the scope of the invention), but it is generally preferred to comminute the granules in a mill such as a hammer mill or a disc mill.

As indicated above, in an especially important aspect of the invention, the acid or acids is/are selected from organic acids which are liquid at room temperature such as acetic acid or, preferably, lactic acid, the latter either as the L enantiomer (L-lactic acid) or the D enantiomer (D-lactic acid) or as a racemic mixture of L-and D-lactic acid. It was found that by the method of the invention, high amounts of these liquid organic acids may be incorporated in the acidifying composition.

It was surprising that it is possible to produce a dry, free-flowing powdery material which on the one hand is capable of containing large amounts, such as 10-35%, of organic acids which are liquid at room temperature, and on the other hand is capable of releasing its acid content in a suitable and efficient manner during the preparation of the bread, so that the acid becomes effectively distributed in the dough to exert its desired acidifying function in the dough and also to be present in the finished bread so as to confer the characteristic acidic taste to the bread. It is believed that one criterion which the cereal must fulfill in order to obtain this effect is that the cereal must be capable of sorbing (adsorbing and/or absoring) the liquid edible organic acid or acids.

When the acid or acids present in the composition of the invention is/are liquid at room temperature,

2

the composition of the invention provides the most efficient presently known means of effectively adding large amounts of these liquid acids to the dough during the dough preparation to ensure a homogenous distribution of the liquid acid throughout the dough. Thus, if, in the known art, a sour dough used for the preparation of e.g. rye bread is not sufficiently acidic, it is very inconvenient in ordinary bakeries to add additional acidity by metering out the very small amounts of the liquid acids needed as a supplement; it is more desirable to use a dry product prepared according to the invention because this is much more easy to weigh out and to distribute in the meal and flour components from which the dough is prepared.

However, as mentioned above, the method of the invention is of value also in the case where the acid or acids is/are selected which are solid at room temperature; in such a case, the acid becomes incorporated in the product in a very homogeneous manner which ensures an effective distribution of the solid acid due to effective distribution of the cereal of the composition carrying the acid. According to an aspect of the invention, the acid component may be a combination of an acid which is liquid at room temperature and a solid acid, e.g. a combination of lactic acid and citric acid or of a acetic acid and citric acid.

The cereal component used in the method of the invention is preferably selected from rye meal, wheat flour, wheat bran, wheat starch, barley flour, barley groats, corn starch, maize gritting, potato starch, and rye starch, the presently preferred components being rye meal and wheat flour. If desired, the cereal component or part of it may be a meal or a flour of a malted cereal such as malted barley, malted rye, or malted wheat. Although it is perfectly possible to combine several types of cereal, this is normally not associated with any particular additional advantages over the use of a single type of cereal, for which reason it is normally preferred to use just one type of ceral in a particular product of the invention. Thus, it is normal to use rye meal as the cereal component when the product is to be used for acidifying dark bread such as rye bread, and to use wheat starch or wheat flour when the product is to be used for acididying light or white bread types.

The particle size of the cereal component may vary over a wide range, such as from an average particle size of about 1 μm for the fine flours up to perhaps 300-400 μm or even higher for the meals or grittings or groats.

It is preferred that the cereal component subjected to the process has a water content of at the most 14% by weight, which is the natural water content of most cereals. A higher water content may result in a lower capability with respect to sorbing liquid acids and with respect to obtaining a dry extrudate as the immediate product of the extrusion.

It may be advantageous that the cereal component has a sub-normal water content, e.g. obtained by drying previously to the extrusion, such as a water content of at the most 12% by weight, e.g. at the most 10% by weight or even at the most 8% by weight.

When the acid or acids in the process is/are liquid at room temperature, such as lactic acid or acetic acid or another liquid organic acid, the water content thereof is preferably at the most 15% by weight more preferably at the most 12% by weight. In certain circumstances, liquid acids of a water content of at the most 10% by weight are preferred. When the acid or acids is/are solid at room temperature, they will normally have a very low water content of a few percent or preferably of at the most 0.5% by weight.

When the acid or acids used in the process is/are solid acids, they may be supplied as they are, i.e. in the form of a powder, to the extrusion process, either in admixture with a cereal component or separately. It is, however, also possible to suspend or dissolve a solid acid such as, e.g. citric acid in a liquid acid such as e.g. lactic acid or acetic acid optionally having a higher water content than stated above, or in water and supply the solution or the suspension to the extrusion process.

While interesting compositions of the invention may be made with an acid content of as little as 6% by weight, it is normally preferred, cf. the above discussion, to incorporate higher amounts of acid in the product to obtain an effective acidifying product with a suitable acidity per weight unit. Thus, it is normally preferred that the weight ratio between the acid component and the cereal component of the mixture subjected to the extrusion is in the range of from about 10:90 to about 40:60, preferably from about 10:90 to about 30:70. More specifically, the most preferred ratio is normally from about 15:85 to about 35:65, still more preferably from 17:83 to 25:75, in particular about 20:80.

The consistency of the resulting extruded product will to a large extent depend on the liquid content of the mixture subjected to extrusion. It is possible to add as much as 30 or even more per cent of liquid such as liquid acid to the cereal component and still obtain a dry and free-flowing product, whereas by addition of liquid in amounts approaching 40% and above, the resulting product will normally be pasty or fluid. At a water content of substantially about 14-15%, such as 20-25%, the product will be a pasty or fluid product which cannot easily - at any rate not without additional drying -be converted into a free-flowing powder product. The usefulness of compositions according to the invention which are not dry and free-flowing depends upon the manner in which the particular bread product is made; while the free-flowing powder is the most desirable product for most modern bread preparation purposes, a pasty product may be suitable, e.g. for use analogously to conventional sour dough, although typically in smaller amounts because of the higher acid content.

In addition to the cereal component and the acid component, the mixture subjected to extrusion may contain other ingredients which are not detrimental to the extrusion process, typically spices such as caraway, aniseed, or fennel, or a herb or an extract of a spice or herb. When incorporated, these compounds will preferably constitute at the most 10% by weight of the mixture subjected to extrusion. It is also possible to include a sugar such as glucose, fructose, saccharose, or a syrup or honey component, preferably in an amount of at the most 10% by weight, calculated by the mixture subjected to extrusion. Also, an alcohol such as ethanol may be included in the product in a small amount, e.g. up to about 8% by weight, such as about 5% by weight.

Normally, the components to be combined are added separately to an extruder equipment. However, as mentioned above, a solid acid may be mixed with the cereal component, or it may be dissolved or suspended in a liquid acid and/or in water. The mixing of the components is suitably performed immediately prior to the extrusion in the mixing/transport means of the extruding equipment. This transport means is typically a screw mixer such as a double screw mixer. The extrusion of the mixture may be performed over a wide range of temperatures such as at temperatures above 100°C, but a preferred range is 110-240°C. (In the present context, the extrusion temperature is to be understood as the temperature measured in the barrel part of the extruder in the immediate vicinity of the extrusion orifice). The temperature range is normally 130-220°C or 160-240°C, and a very preferred range is 140-220°C, in particular 160-200°C, preferably 160-180°C. A temperature range which is presently preferred in practice for the preparation of a acidifying composition based on rye meal is 170-190°C, in particular about 170°C. The orifice or each orifice through which the mixture is extruded will normally have a diameter of from about 1/2 to about 8 mm; often, a diameter of about 1-6 mm, such as about 4 mm, is very well suited.

When the extruded product is a granulate product in accordance with the presently preferred embodiments of the invention, it may be comminuted in a mill such as a hammer mill or a disc mill into a meal-like particulate product. However, as explained above, the extruded product may also be a more paste-like or fluid consistency. The pH of an aqueous slurry of the product is typically in the range of 2-2.5, such as about 2.2. The acid number of the product is preferably in the range between about 30 and about 140, such as about 120. A typical Blaine value of the comminuted acidifying composition is normally in the range from about 500-2000 cm²/g.

The product according to the invention may be defined as an acidifying composition for bread or bread products, comprising an extruded cereal component carrying at least 6% by weight of an edible organic acid or a mixture of edible organic aicds. In the present context, the term "carrying" is to be understood in accordance with what has been explained above. Thus, "carrying" indicates the homogeneous distribution of the acid throughout the cereal component, which in the case of a liquid edible organic acid or acids may be understood as the sorption (adsorption and/or absorption) of the liquid acid or acids by the cereal component, or in the case of a solid acid, the homogeneous and effective mixing of the solid acid and the cereal component.

The dry acidifying composition of the invention is used in the preparation of rye bread or other bread comprising rye meal in combination with other meal types in the same manner as comminuted sour dough but typically in smaller amounts because its content of acid can be made higher. The composition is normally incorporated in an amount of 0.5-10% by weight, calculated on the dry mixture. It is preferred that the amount of acidifying composition added to the dry bread mixture results in an acid content of 0.05-2% by weight, calculated on the dry mixture. For the preparation of dark bread or dark bread products based on rye meal optionally in combination with other types of flours or meals, it is preferred to employ an acidifying composition based on rye meal.

When preparing light or white breads or bread products, in particular whole meal type light or white bread, the component is also preferably added as a dry powder. In this case, it is preferred that the cereal component of the acidifying composition employed comprises a light-coloured cereal such as wheat flour or wheat starch. This is to ensure that the bread is not discoloured by the addition of an acidifying composition of a darker colour.

The preparation and handling of the dough and the baking of the bread are performed in the normal manner. The composition may suitably be incorporated in the bread mix constituents together with a bread-improving composition as described in European Patent Application Publication No. 0 152 943, i.e., a composition prepared by heating and extrusion of a mixture of a cereal flour or meal or starch on the one hand and a vegetable fibrous material on the other hand and, if desired, in combination with the taste-adjusting compostion disclosed in International Patent Application Publication No. WO 87/04597.

The invention is further illustrated in the following example:

## EXAMPLE 1

To an extruder of the type BC 45 supplied by Creusot-Loire, France, and comprising a double screw rotating at a rotational speed of 180 r.p.m. and two nozzles of a diameter of 2 mm, part of the double screw length being cooled by means of a water jacket and the part of the double screw being adjacent to the nozzles being heated by means of an induction heating jacket, a mixture of 30% by weight of lactic acid and 70% by weight of rye meal is added, the rye meal being supplied through an inlet funnel comprising two screws conveying the rye meal, and the lactic acid being supplied to the double screw through a tube.

The temperature in the screw section of the extruder was kept at 180°C.

The resulting crisp, curly, brownish granules were comminuted to a fine meal-like product in a hammer mill.

The resulting product has a distinct flavour and resulted in a pH of 2.2 in a 10% aqueous slurry of the product.

Rye bread was prepared in the following manner:

40.1% by weight of rye meal was admixed with

10% by weight of rye grains,

41% by weight of wheat flour,

1.2% of the dough acidifying composition prepared as described above,

2% by weight of salt,

1.7% by weight of fully hardened vegetable fat,

1% by weight of a finely divided composition prepared by heating and extrusion of a mixture of 40% by weight of rye meal and 60% by weight of wheat bran as described in Example 1 of European published patent application No. 0 152 943, and 3% by weight of the powdery product prepared as described above.

1000 g of the resulting mixture was admixed with 20 g of yeast and 500 g of water. The dough was allowed to rise for one hour, whereupon it was put into a baking tin and allowed to rise for an additional 30 minutes and was then baked for 1 hour in an oven which has been preheated to 230°C and in which the temperature gradually decreased to 180°C during the baking time.

The resulting bread had a pleasant typical brown rye bread colour and a characteristic rye bread taste.

## EXAMPLE 2

In the same manner as described in Example 1, various acidifying compositions were made by extrusion of mixtures of rye meal and lactic acid. In the examples, a 88% lactic acid was employed. The temperature in the barrel of the extruder was kept at 170°C and the rotational speed of the screw was kept at 160 r.p.m.

The resulting reddish granular product having a signficant acidic taste was comminuted in a hammer mill.

The weight ratio of rye meal and lactic acid in each of the acidifying compositions are stated in Table 1 below together with the extruder capacity (the amount of acidifying composition prepared in one hour), the acid number and the degree of acidity ( = 1.783 x acid number) of the product, and the weight percentage of lactic acid in the product, based on the total weight of the product.

The acid number is defined as the amount of KOH (in mg) needed to neutralize 1 g of product by titration. The percentage of lactic acid in the product is calculated from the acid number.

The Blaine value of each of the comminuted acidifying compositions (the Blaine value is commonly used to characterized the surface properties and the porosity of particles) was determined according to ASTM C 204-55. The Blaine value of the composition containing 70% of rye meal and 30% of lactic acid could not be determined, presumably because the particles of this composition were rather coarse.

**TABLE 1**

**Acidifying composition**

| Rye meal/ lactic acid in acidifying composition | Extruder capacity kg/h | Acid number | Degree of acidity | Lactic acid in the product % | Blaine value cm$^2$/g |
|---|---|---|---|---|---|
| 95:5 | 39 | 28.6 | 50.9 | 4.59 | 1700 |
| 90:10 | 41 | 48.5 | 86.5 | 7.79 | 1930 |
| 85:15 | 43 | 70.6 | 125.9 | 11.33 | 1120 |
| 80:20 | 46 | 95.3 | 169.9 | 15.30 | 780 |
| 75:25 | 49 | 118.4 | 211.1 | 19.01 | 500-600 |
| 70:30 | 52 | 136.3 | 243.0 | 21.88 | - |

In the same manner as described in Example 1, rye bread containing the above acidifying compositions was prepared by using 1400 g of rye meal and acidifying composition, 20 g of yeast, 40 g of salt, 600 g of wheat flour, and 1400 g of water.

For each bread prepared, the acid content was adjusted to about 10 g by varying the amount of acidifying composition used in accordance with the actual acid content of the composition. For instance, the acidifying composition made from 80% by weight of rye meal and 20% by weight of lactic acid was employed in an amount of 50 g. The variation in the acidifying composition content was compensated in the amount of rye meal employed and for all breads the total amount of rye meal and acidifying composition was kept at 1400 g as stated above.

On the bread, the reflectance parameters according to the L*a*b method (CIE (Commission Internationale de l'Eclairage) 1976) were measured on a Minolta Chromameter II reflectance. The parameters characterize the colour of the bread. The L*-value designates the light component, the a*-value (ranging from -60 to +60) designates the green/red component and b*-value (ranging from -60 to +60) designates the blue/yellow component of the colour.

Further, the volume, the pH and the acid number of the bread were determined. The weight percentage of lactic acid in the bread based on the total weight of the bread was calculated from the acid number.

The results are stated in Table 2 below. In Table 2, the various acidifying compositions employed are defined by the rye meal/lactic acid ratio.

## TABLE 2

### Rye bread

| Rye meal/ lactic acid in acidifying composition | acid number | Lactic acid % | pH | Colour determination | | | volume cm³ |
|---|---|---|---|---|---|---|---|
| | | | | $L^*$ | $a^*$ | $b^*$ | |
| 95: 5 | 3.4 | 0.55 | 5.0 | 54.01 | 3.11 | 12.76 | 1761 |
| 90:10 | 3.2 | 0.51 | 5.0 | 55.37 | 2.53 | 12.71 | 1814 |
| 85:15 | 3.3 | 0.53 | 5.1 | 56.61 | 2.34 | 11.64 | 1819 |
| 80:20 | 3.3 | 0.53 | 5.0 | 56.36 | 2.33 | 11.42 | 1844 |
| 75:25 | 3.2 | 0.51 | 5.1 | 57.20 | 2.39 | 11.51 | 1795 |
| 70:30 | 3.5 | 0.56 | 5.0 | 56.76 | 2.40 | 11.88 | 1858 |

The dough containing the acidifying compositions of a rye meal/lactic acid ratio of 95:5 and 90:10, respectively, appeared rather soft due to the high content of acidifying composition needed to confer a sufficient acidity to the bread. The dough containing the remaining acidifying compositions, i.e. the compositions of a rye meal/lactic acid ratio of 85:15, 80:20, 75:25 and 70:30, resulted in a dough of a satisfactory consistence.

All loaves had a pleasant and characteristic acidic taste and were of good sliceability. Also the volume properties of the bread were good, and from Table 2 it may be seen that the highest volume of the bread was obtained with the acidifying composition of rye meal/lactic acid ratios of 80:20 and 70:30.

From Table 2 it may be seen that the reflectance parameters of the bread do not vary significantly with the acidifying composition used.

## EXAMPLE 3

The effect of varying the extrusion temperature on the acidifying composition and the bread prepared from this, was investigated. Three acidifying compositions were prepared from a mixture of 80% by weight of rye meal and 20% by weight of lactic acid in the same manner as described in Example 2.

The temperatures of the barrel of the extruder was kept at 190°C, 150°C, and 130°C, respectively.

The resulted reddish granules product having a significant acidic taste was comminuted in a hammer mill, and used for rye bread preparation in the same manner as described in Example 2. The extrusion capacity, the acid number, the degree of acidity and the weight percentage of lactic acid of the acidifying composition appear from Table 3. On the bread, pH, the acid number, the reflectance parameters and the volume were measured, and the weight percentage of lactic acid in the bread was calculated from the acid number. The results are stated in Table 4. In Table 3 and 4, each of the acidifying compositions is characterized by the extrusion temperature at which they were prepared.

## TABLE 3

**Acidifying composition**

| Extru-sion tempe-rature | capa-city kg/h | Acid num-ber | Degree of acidi-ty | lactic acid % | Blaine value cm$^2$/g |
|---|---|---|---|---|---|
| 190 | 46 | 93.8 | 167.2 | 15.06 | 980 |
| 150 | 46 | 94.9 | 169.2 | 15.24 | 785 |
| 130 | 46 | 91.4 | 163.0 | 14.67 | 845 |

As may be seen from Table 3, the acid number of the acidifying composition does not vary significantly with the extrusion temperature employed.

## TABLE 4

**Rye bread prepared with the acidifying compositions of Table 3**

| Extru-sion tempe-rature | pH | Acid num-ber | Lactic acid % | Colour determination | | | volume cm$^3$ |
|---|---|---|---|---|---|---|---|
| | | | | L$^*$ | a$^*$ | b$^*$ | |
| 190 | 5.0 | 3.5 | 0.56 | 55.81 | 2.39 | 11.71 | 1890 |
| 150 | 5.0 | 3.5 | 0.56 | 56.37 | 2.62 | 11.79 | 1877 |
| 130 | 5.0 | 3.4 | 0.55 | 56.36 | 2.66 | 11.33 | 1801 |

## EXAMPLE 4

Acidifying compositions were prepared from 80% by weight of wheat flour and wheat bran, respectively, and 20% lactic acid by extrusion in the same manner as described in Example 2. The extruded light granular product of a significant acidic taste was comminuted in a hammer mill and used in the preparation of rye breads in the same manner as described in Example 2.

The extrusion capacity, the acid number, the degree of acidity and the weight percentage of lactic acid of the acidifying composition appear from Table 5. On the bread, pH, the acid number, the reflectance parameters and the volume were measured, and the weight percentage of lactic acid in the bread was calculated from the acid number. The results are stated in Table 6.

**TABLE 5**

**Acidifying composition**

| Cereal | capacity kg/h | Acid number | Degree of acidity | lactic acid % | Blaine value cm$^2$/g |
|---|---|---|---|---|---|
| Wheat flour | 43 | 84.7 | 151.0 | 13.60 | 900 |
| Wheat bran | 42 | 96.8 | 172.6 | 15.54 | - |

**TABLE 6**

**Rye bread prepared with the acidifying compositions of Table 5**

| Cereal | pH | Acid number | Lactic acid % | Colour determination | | | volume cm$^3$ |
|---|---|---|---|---|---|---|---|
| | | | | L* | a* | b* | |
| Wheat flour | 5.1 | 3.5 | 0.56 | 57.59 | 2.24 | 12.15 | 1787 |
| Wheat bran | 5.1 | 3.8 | 0.61 | 55.63 | 2.38 | 11.14 | 1766 |

The Blaine value of the acidifying composition containing the wheat bran could not be determined because the particles of this composition was rather coarse.

From Table 6 it may be seen that the volume of the bread prepared by use of wheat based acidifying compositions are slightly lower than what is obtained for bread made from rye meal based acidifying compositions.

**EXAMPLE 5**

Four types of white bread were prepared. The composition of each of the bread types was as appears from Table 7:

**TABLE 7**

| | Bread type | | | |
| --- | :---: | :---: | :---: | :---: |
| | I | II | III | IV |
| | g | g | g | g |
| Wheat flour | 2000 | 1000 | 1000 | 2000 |
| Whole-wheat-meal | 0 | 1000 | 1000 | 0 |
| Yeast | 70 | 70 | 70 | 70 |
| Salt | 36 | 36 | 36 | 36 |
| Partially hardened vegetable fat | 50 | 50 | 50 | 50 |
| Water | 1150 | 1150 | 1150 | 1150 |
| Acidifying composition (80% of wheat flour/ 20% of lactic acid) | 20 | 20 | 30 | 0 |

A dough was prepared from each one of the above compositions and allowed to rise for 2 x 15 minutes at a temperature of 26°C. The dough containing wheat flour and no whole-meal was kneaded in a spiral kneading machine for 2 minutes in the first gear and for 4 minutes in the second gear whereas the whole-meal dough was kneaded for 2 minutes in the first gear and 7 minutes in the second gear. 550 g dough of each of the above compositions was put into baking tins and allowed to rise for about 45 miutes at a temperature of 36°C in relative humidity of 85%. The loaves were baked for 30 minutes in an oven of a temperature of 210 °C, and the loaves were analysed in the same manner as described in Examples 2-4.

### TABLE 8

### Wheat breads

| Bread type | Acid number | pH | Colour determination | | | volume cm$^3$ |
|---|---|---|---|---|---|---|
| | | | L$^*$ | a$^*$ | b$^*$ | |
| I | 1.8 | 5.2 | 79.97 | -2.50 | 13.19 | 969 |
| II | 1.9 | 5.5 | 68.72 | +0.76 | 12.70 | 838 |
| III | 2.9 | 5.3 | 71.06 | +0.67 | 12.57 | 838 |
| IV | 1.2 | 5.9 | 79.85 | -2.51 | 13.21 | 966 |

All loaves were of a good sliceability, although the best sliceability was obtained for loaves of bread type III. Loaves containing acidifying composition (Bread types I, II and III) were of a characteristic acidic and pleasant taste, whereas loaves not containing acidifying composition (bread type IV) were rather flavourless and not particularly pleasant in taste.

The volume of each of the bread types of Table 7 cannot direclty be compared to the volume of the rye breads prepared according to Examples 2-5, as these rye breads were prepared from 1150 g of dough.

### Claims

1. An acidifying composition for bread and bread products, comprising an extruded cereal component carrying at least 6% by weight of an edible organic acid or a mixture of edible organic acids.

2. A composition according to claim 1, in which the edible organic acid or acids is/are selected from lactic acid, acetic acid, citric acid, malic acid, and tartaric acid.

3. A composition according to claim 1 or 2 wherein the acid or acids comprises/comprise an acid or acids which is/are liquid at room temperature, and the cereal component comprises a cereal or cereals capable of sorbing the liquid edible organic acid or acids.

4. A composition according to any of claims 1-3 in which the edible organic acid or acids is/are selected from lactic acid and acetic acid.

5. A composition according to any of claims 1-4 wherein the cereal component is selected from rye meal, wheat flour, wheat bran, wheat starch, barley flour, barley groats, corn starch, maize gritting, potato starch, and rice starch, preferably from rye meal and wheat flour.

6. A composition according to any of the preceding claims which is a dry free-flowing powder.

7. A composition according to any of the preceding claims wherein the weight ratio between the acid component and the cereal component is in the range from about 10:90 to about 40:60, preferably from about 10:90 to about 30:70, more preferably from about 15:85 to about 35:65, still more preferably from 17:83 to 25:75, in particular about 20:80.

8. A method for preparing an acidifying composition for bread and bread products, comprising extruding a mixture comprising a cereal component and at least 6% by weight of an edible organic acid or a mixture of edible organic acids at an elevated temperature and optionally disintegrating the extruded product.

9. A method according to claim 8, in which the edible organic acid or acids is/are selected from lactic acid, acetic acid, citric acid, malic acid, and tartaric acid.

10. A method according to claim 8 or 9 wherein the acid or acids comprises/comprise an acid or acids which is/are liquid at room temperature, and the cereal component comprises a cereal or cereals capable of sorbing the liquid edible organic acid or acids.

11. A method according to any of claims 8-10 in which the edible organic acid or acids is/are selected from lactic acid and acetic acid.

12. A method according to any of claims 8-11 wherein the cereal component is selected from rye meal, wheat flour, wheat bran, wheat starch, barley flour, barely groats, corn starch, maize gritting, potato starch. and rice starch.

13. A method according to claim 12 wherein the cereal component is selected from rye meal and wheat flour.

14. A method according to any of claims 8-13 wherein the weight ratio between the acid component and the cereal component is in the range from about 10:90 to about 40:60, preferably from about 10:90 to about 30:70, more preferably from about 15:85 to about 35:65, still more preferably from 17:83 to 25:75, in particular about 20:80.

15. A method according to any of claims 8-14 in which the extrusion is performed at a temperature of above 100°C, such as about 110-240°C, such as 130-220°C, or 160-240°C, such as in the range of 140-200°C in particular 160-200°C, preferably 160-180°C.

16. A method according to claim 15 in which the extrusion is performed at a temperature of 170-190°C, in particular about 170°C.

17. A method for manufacturing bread or bread products comprising including, in the mixture from which the bread dough is made, an extruded acidifying composition containing a cereal and at least 6% by weight of an edible organic acid or a mixture of edible organic acids, preferably a composition according to any of claims 1-7 which is preferably prepared according to any of claims 8-16.

18. A method according to claim 17 wherein the amount of the acidifying composition added is 0.5-10% by weight, calculated on the dry mixture.

19. A method according to claim 17 or 18 wherein the acidifying composition is added in an amount resulting in an acid content of 0.05-2% by weight, calculated on the dry mixture.

## DOCUMENTS CONSIDERED TO BE RELEVANT

| Category | Citation of document with indication, where appropriate, of relevant passages | Relevant to claim | CLASSIFICATION OF THE APPLICATION (Int Cl.4) |
|---|---|---|---|
| A | Derwent's Abstract no 74-20615v/11, SU 382 404 | 1-19 | A 21 D 2/38 |
| A | Derwent's Abstract no 85-225775/37 JP 60145060 | 1-19 | |
| A | Food Technology, ME Cuddy et al, Jan. 1982, 36, (1) 54, 56-59 | 1-19 | |
| A | EP-A-0 152 943 (NEXUS APS) | 1-19 | |
| A | EP-A-1 124 996 (NABISCO BRANDS INC.) | 1-19 | |
| A | DE-B-2 851 053 (WERNER & MERTZ GMBH) | 1-19 | |
| P | EP-A1-0 235 601 (NEXUS APS) | 1-19 | |

TECHNICAL FIELDS
SEARCHED (Int. Cl 4)

A 21 D

The present search report has been drawn up for all claims

| Place of search | Date of completion of the search | Examiner |
|---|---|---|
| STOCKHOLM | 1 FEBRUARY 1988 | K BOIJE JANSON |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82